# EUROPEAN PATENT SPECIFICATION

(11) **EP 4 180 288 B1**
(45) Date of publication and mention of the grant of the patent: **19.02.2025**
(21) Application number: 21809891.1
(22) Date of filing: 25.10.2021
(51) Int. Cl.: B60T 13/24, B60T 15/30, B60T 13/26

(54) **PRESSURE BRAKING DEVICE, BRAKING SYSTEM AND RAIL VEHICLE**
DRUCKBREMSVORRICHTUNG, BREMSSYSTEM UND SCHIENENFAHRZEUG
DISPOSITIF DE FREINAGE PAR PRESSION, SYSTÈME DE FREINAGE ET VÉHICULE FERROVIAIRE

(30) Priority: 24.09.2021 CN 202111124035
(43) Date of publication of application: 17.05.2023
(73) Proprietor: Meishan CRRC Brake Science & Technology Co., Ltd., Meishan, Sichuan 620010 (CN)
(72) Inventor: XIAO, Chen, Meishan City Sichuan 620010 (CN); SONG, Zhiyong, Meishan City Sichuan 620010 (CN); LI, Min, Meishan City Sichuan 620010 (CN); SHEN, Yanfei, Meishan City Sichuan 620010 (CN); YANG, Jianping, Meishan City Sichuan 620010 (CN); LIU, Yi, Meishan City Sichuan 620010 (CN); CHEN, Tai, Meishan City Sichuan 620010 (CN); ZHONG, Xingyu, Meishan City Sichuan 620010 (CN); WANG, Kaien, Meishan City Sichuan 620010 (CN)
(74) Representative: Locas, Davide
(86) International application number: PCT/CN2021/126186
(87) International publication number: WO 2023/045009

(56) References cited:
- CN-A- 101 508 288
- CN-A- 111 688 657
- CN-U- 212 401 168
- DE-B- 1 142 382
- DE-B4- 19 918 070
- DE-C- 957 307
- DE-C2- 4 309 386
- GB-A- 506 809

## Description

### Technical Field

The present invention relates to the field of braking technologies, particularly to a pressure braking device, a braking system, and a railway vehicle.

### Background Art

The railway vehicles are quite important transportation means in transportation, in which the braking systems of the railway vehicles are mainly divided into two-pressure braking system and three-pressure braking system according to the braking modes, and the two braking modes are mainly distinguished in release action of the braking system, wherein the two-pressure braking system is one-time direct release, and the three-pressure braking system is multiple-time staged release.

For example, DE1142382B discloses a braking device, especially for rail vehicles with an electrodynamic braking device, an indirect and a direct-acting compressed air braking device.

For example, DE957307C discloses a compressed air brake device for rail vehicles with three-pressure control valve and accelerator.

For example, DE4309386C2 discloses a control valve for indirect air brakes of rail vehicles.

In the prior art, on a three-pressure braking mechanism in the three-pressure braking system, to make the intensity of pressure in a first working chamber (i.e., intensity of pressure of train pipe) and the intensity of pressure in a second working chamber (i.e., intensity of pressure of control reservoir (control air cylinder)) equal, only through multiple times of release actions, complete release can be realized, thus the release efficiency is low, and the running of the railway vehicles is affected.

### Summary

The present invention provides a pressure braking device, a braking system, and a railway vehicle, which can improve the release efficiency of the braking.

Embodiments of the present invention may be realized as follows.

In a first aspect thereof, the present invention relates to a pressure braking device according to claim 1.

Optionally, the side wall of the pressure reducing piston may be further provided with a second groove, a side wall of the cylinder block may be recessed so as to form a blocking boss, and the blocking boss may be configured to abut against the second groove, so that the pressure reducing piston may be held in the second preset position.

Optionally, the pressure braking device further may include a first sealing ring, and the first sealing ring may be sleeved over one end of the pressure reducing piston away from the second chamber.

Optionally, the first sealing ring may be an annular sealing ring.

Optionally, the second sealing ring may be an annular sealing ring.

Optionally, the pressure braking device further may include a second sealing ring, and the second sealing ring may be sleeved over one end of the pressure reducing piston away from the first chamber.

Optionally, the pressure braking device further may include a first pipeline and a second pipeline, the first pipeline may be configured to make the first chamber communicate with the first working chamber, and the second pipeline may be configured to make the second chamber communicate with the second working chamber.

Optionally, shapes of the first pipeline and the second pipeline may be both curved.

In a second aspect thereof, the present invention relates to a braking system, wherein the braking system may include an auxiliary reservoir, a train pipe, a control reservoir, a brake cylinder, and the above pressure braking device, and all of the auxiliary reservoir, the train pipe, the control reservoir, and the brake cylinder may be in communication with the pressure braking device.

In a third aspect thereof, the present invention relates to a railway vehicle, wherein the railway vehicle may include a vehicle body and the above braking system, wherein the braking system may be mounted on the vehicle body.

The beneficial effects of the pressure braking device, the braking system, and the railway vehicle in the embodiments of the present invention at least include, for example:
An embodiment of the present invention provides a pressure braking device, which includes:
a three-pressure braking mechanism and the pressure reducing mechanism, the three-pressure braking mechanism includes a first cylinder block, and the first cylinder block has a first working chamber and a second working chamber isolated from each other; the pressure reducing mechanism includes a cylinder block, a pressure reducing piston, a partition member, and a pressure reducing chamber; a working passage is provided on a side wall of the cylinder block; the pressure reducing piston has a first end face and a second end face opposite to each other, the side wall of the pressure reducing piston is provided with a first groove, and an area of the first end face is greater than that of the second end face; the first groove and the inner wall of the cylinder block define a piston chamber; the first end face and the inner wall of the cylinder block define a first chamber, and the second end face and the inner wall of the cylinder block define a second chamber; the cylinder block is configured to be in communication with the first cylinder block, the first chamber is configured to be in communication with the first working chamber, and the second chamber is configured to be in communication with the second working chamber; the partition member is provided in the working passage, the partition member is configured to partition the working passage into an outside passage and a pressure reducing passage, the pressure reducing passage and the pressure reducing chamber are in communication with each other, and the piston chamber and the outside passage are in communication with each other, wherein the pressure reducing piston is movably provided in the cylinder block so as to be switched between the first preset position and the second preset position, in a situation that the pressure reducing piston is located in the first preset position, the second working chamber, the second chamber, the pressure reducing passage, and the pressure reducing chamber are in communication with each other; and in a situation that the pressure reducing piston is located in the second preset position, the pressure reducing piston blocks the communication between the second chamber and the pressure reducing passage. It is easily understood that when the first working chamber and the second working chamber have the same intensity of pressure, as the area of the first end face is greater than that of the second end face, the gas pressure in the first working chamber maintains the pressure reducing piston in the second preset position, at this time, the pressure reducing piston blocks the communication between the second chamber and the pressure reducing passage. After the first working chamber is depressurized, until the pressure of the gas in the second chamber to the second end face is greater than the pressure of the gas in the first chamber to the first end face, the pressure reducing piston moves towards the first preset position, and reach the first preset position, further, the second working chamber, the second chamber, the pressure reducing passage, and the pressure reducing chamber are in communication with each other, in this case, an entire air chamber volume in communication with the second working chamber is increased, and the intensity of pressure of the gas is decreased, in this case, the first working chamber is inflated and pressurized again, until the pressure of the gas in the second chamber to the second end face is less than the pressure of the gas in the first chamber to the first end face, the pressure reducing piston moves towards the second preset position and reaches the second preset position, in this case, the pressure reducing piston blocks the communication between the second chamber and the pressure reducing passage, then the second chamber is inflated and pressurized, and finally the intensities of pressure in the first working chamber and the second working chamber are kept equal again, further the intensities of pressure in the first working chamber and in the second working chamber are enabled to be equal again more quickly, and the release efficiency of the braking is improved.

An embodiment of the present invention further provides a braking system, wherein the braking system may include an auxiliary reservoir, a train pipe, a control reservoir, a brake cylinder, and the above pressure braking device, and all of the auxiliary reservoir, the train pipe, the control reservoir, and the brake cylinder may be in communication with the pressure braking device, which can improve the release efficiency of the braking.

An embodiment of the present invention further provides a railway vehicle, wherein the railway vehicle may include a vehicle body and the above braking system, and the braking system may be mounted on the vehicle body, which can improve the release efficiency of the braking.

### Brief Description of Drawings

In order to more clearly illustrate technical solutions of embodiments of the present invention, accompanying drawings which need to be used in the embodiments will be introduced briefly below, and it should be understood that the drawings below merely show some embodiments of the present invention, therefore, they should not be considered as limitation on the scope, and those ordinarily skilled in the art still could obtain other relevant drawings according to these drawings, without using any creative efforts.
FIG. 1 is a schematic view of a three-pressure braking mechanism in the prior art;
FIG. 2 is a schematic view of a pressure braking device provided in an embodiment of the present invention, in an inflation release position;
FIG. 3 is a schematic view of the pressure braking device provided in an embodiment of the present invention, in a common braking position; and
FIG. 4 is a schematic view of the pressure braking device provided in an embodiment of the present invention, in an emergency braking position.

Reference signs: 1000-pressure braking device; 3000-three-pressure braking mechanism; 100-valve body; 110-second cylinder block; 120-first cylinder block; 130-support platform; 200-adjusting plunger; 210-plunger rod; 2111-first end; 2112-second end; 2113-first opening; 2114-second opening; 220-first plunger plate; 230-second plunger plate; 300-rubber valve; 400-first elastic member; 500-second elastic member; 2000-pressure reducing mechanism; 2100-cylinder block; 2110-working passage; 2120-blocking boss; 2200-pressure reducing piston; 2210-first end face; 2220-second end face; 2230-first groove; 2240-second groove; 2250-piston chamber; 2300-first chamber; 2400-second chamber; 2500-partition member; 2510-outside passage; 2520-pressure reducing passage; 2600-pressure reducing chamber; 2700-first sealing ring; 2710-second sealing ring; 2800-first pipeline; 2900-second pipeline; 10-first working chamber; 11-train pipe opening; 20-second working chamber; 21-control reservoir opening; 30-third working chamber; 31-brake cylinder opening; 40-fourth working chamber; 41-auxiliary reservoir opening; 50-fifth working chamber; 51-outside opening; AR-auxiliary reservoir; BP-train pipe (brake pipe); CR-control reservoir; BC-brake cylinder.

### Detailed Description of Embodiments

In order to make objectives, technical solutions, and advantages of the embodiments of the present invention clearer, the technical solutions in the embodiments of the present invention will be described clearly and completely below in conjunction with accompanying drawings in the embodiments of the present invention, and apparently, the embodiments described are some but not all embodiments of the present invention. Generally, components in the embodiments of the present invention, as described and shown in the accompanying drawings herein, may be arranged and designed in various different configurations.

Therefore, the detailed description below of the embodiments of the present invention provided in the accompanying drawings is not intended to limit the scope of the present invention claimed, but merely illustrates chosen embodiments of the present invention. All of other embodiments obtained by those ordinarily skilled in the art based on the embodiments in the present invention without using creative efforts shall fall within the scope of protection of the present invention.

It should be noted that similar reference signs and letters represent similar items in the following accompanying drawings, therefore, once a certain item is defined in one accompanying drawing, it is not needed to be further defined or explained in subsequent accompanying drawings.

In the description of the present invention, it should be indicated that orientation or positional relationships indicated by terms such as "upper", "lower", "inner", and "outer", if appear, are based on orientation or positional relationships as shown in the drawings, or orientation or positional relationships of a product of the present invention when being conventionally placed in use, merely for facilitating describing the present invention and simplifying the description, rather than indicating or suggesting that related devices or elements have to be in the specific orientation or configured and operated in a specific orientation, therefore, they should not be construed as limiting the present invention.

Besides, terms such as "first" and "second", if appear, are merely for distinctive description, but should not be construed as indicating or implying importance in the relativity.

It should be indicated that the features in the embodiments of the present invention may be combined with each other if there is no conflict.

The railway vehicles are quite important transportation means in transportation, in which the braking systems of the railway vehicles are mainly divided into two-pressure braking system and three-pressure braking system according to the braking modes, and the two braking modes are mainly distinguished in release action of the braking system, wherein the two-pressure braking system is one-time direct release, and the three-pressure braking system is multiple-time staged release. In the prior art, on a three-pressure braking mechanism in the three-pressure braking system, to make the intensity of pressure in a first working chamber (i.e., intensity of pressure of train pipe) and the intensity of pressure in a second working chamber (i.e., intensity of pressure of control reservoir) equal, only through multiple times of release actions, complete release can be realized, thus the release efficiency is low, and the running of the railway vehicles is affected.

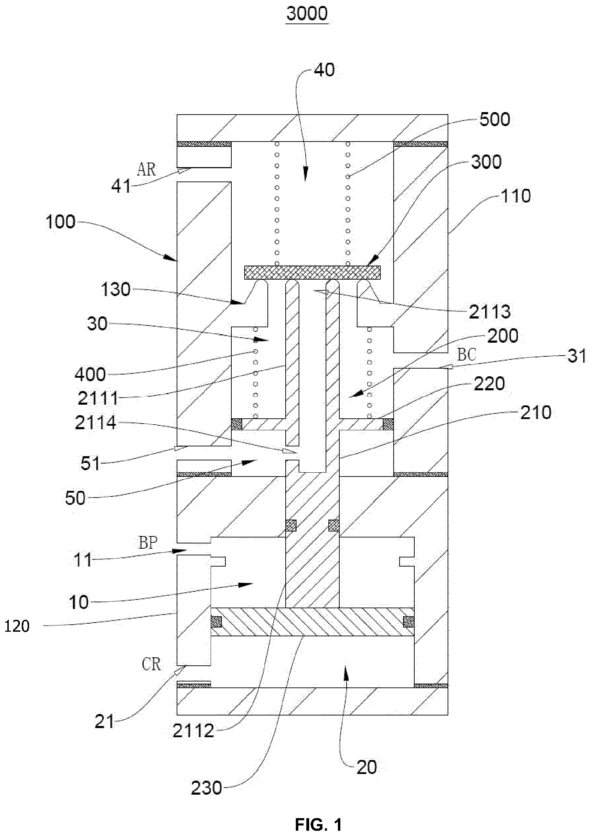

Referring first to FIG. 1, in the prior art, when the three-pressure braking mechanism 3000 is in normal operation, the pressure in the control reservoir CR should maintain dynamic balance with the sum of the pressure in the train pipe BP and the pressure in the brake cylinder BC, i.e. the pressure of the pressured air in the control reservoir CR pushing an adjusting plunger 200 upward is equal to the pressure of the pressured air in the train pipe BP pushing the adjusting plunger 200 downward plus the pressure of the pressured air in the brake cylinder BC pushing the adjusting plunger 200 downward.

The three-pressure braking mechanism 3000 may include a valve body 100, the adjusting plunger 200, a rubber valve 300, a first elastic member 400, and a second elastic member 500. The valve body 100 may include a second cylinder block 110 and a first cylinder block 120 therein, and the second cylinder block 110 and the first cylinder block 120 are isolated from each other; the adjusting plunger 200 may include a plunger rod 210, a first plunger plate 220, and a second plunger plate 230, the first plunger plate 220 and the second plunger plate 230 may be arranged at intervals and fixedly connected to the plunger rod 210, a circumferential wall of the first plunger plate 220 may abut against inside of the second cylinder block 110, and a circumferential wall of the second plunger plate 230 may abut against inside of the first cylinder block 120 so as to divide the first cylinder block 120 into a first working chamber 10 and a second working chamber 20.

A first end 2111 of the plunger rod 210 may be located in the second cylinder block 110, a second end 2112 of the plunger rod 210 may be located in the first cylinder block 120, the first end 2111 may be in a hollow structure, and an end portion may be provided with a first opening 2113 of the plunger rod 210, and a side wall of the first end 2111 may be provided with a second opening 2114 of the plunger rod 210.

An inner wall of the valve body 100 may be provided with a support platform 130 in a protruding way, the support platform 130 may be located in the second cylinder block 110, the first elastic member 400 may be abutted between the support platform 130 and the first plunger plate 220, the rubber valve 300 may be provided at a side of the support platform 130 away from the first plunger plate 220, and the second elastic member 500 may be abutted between a side of the rubber valve 300 away from the support platform 130 and an inner wall of the second cylinder block 110. Specifically, the first elastic member 400 and the second elastic member 500 may be springs.

The rubber valve 300 may be configured to abut against the support platform 130, and may define a third working chamber 30 with an outer wall of the plunger rod 210, the inner wall of the second cylinder block 110, and a side of the first plunger plate 220 away from the second plunger plate 230, the outer wall of the second cylinder block 110 may be provided with a brake cylinder opening 31, and the brake cylinder opening 31 may be configured to make the brake cylinder BC communicate with the third working chamber 30.

A side of the rubber valve 300 away from the support platform 130 and the inner wall of the second cylinder block 110 may define a fourth working chamber 40, the outer wall of the second cylinder block 110 may be provided with an auxiliary reservoir opening 41, the auxiliary reservoir opening 41 may be configured to make the auxiliary reservoir AR communicate with the fourth working chamber 40, and the third working chamber 30 and the fourth working chamber 40 may be isolated from each other. A side of the first plunger plate 220 away from the rubber valve 300 and an inner wall of the second cylinder block 110 may define a fifth working chamber 50, the outer wall of the second cylinder block 110 may be provided with an outside opening 51, the outside opening 51 may be configured to make the fifth working chamber 50 communicate with the outside, and the second opening 2114 and the fifth working chamber 50 may be in communication with each other.

The first cylinder block 120 may be provided with a train pipe opening 11 and a control reservoir opening 21, the train pipe opening 11 may be configured to make the train pipe BP communicate with the first working chamber 10, and the control reservoir opening 21 may be configured to make the control reservoir CR communicate with the second working chamber 20.

When braking is needed, the train pipe BP can be depressurized, that is, the first working chamber 10 is depressurized, at this time, the pressure of the gas in the second working chamber 20 formed below the second plunger plate 230 is greater than the pressure of the gas in the first working chamber 10 above the second plunger plate 230, the adjusting plunger 200 can move upward against the elastic force of the first elastic member 400, and further push and open the rubber valve 300, so that the pressurized gas in the auxiliary reservoir AR can enter the third working chamber 30, at this time, the pressure of gas in the third working chamber 30 to an upper side of the first plunger plate 220 gradually increases, under the elastic force of the first elastic member 400, the first plunger plate 220 can move downward, and the rubber valve 300 can be abutted against the support platform 130 again under the effect of the second elastic member 500, so as to close channels in the fourth working chamber 40 and the third working chamber 30, at this time, the braking is completed. Then, the train pipe BP can be boosted to release, and the intensity of pressure in the first working chamber 10 increases, causing the pressure on the second plunger plate 230 to increase continuously, further the second plunger plate 230 is enabled to move downwards, the first plunger plate 220 also moves downwards and disengages from the rubber valve 300, and the gas in the third working chamber 30, after entering the first opening 2113 of the first end 2111, enters the fifth working chamber 50 through the second opening 2114, and then is discharged through the outside opening 51.

At this time, the intensity of pressure in the third working chamber 30 is gradually decreased, downward pressure to the first plunger plate 220 is also gradually decreased, and since the intensity of pressure in the second working chamber 20 and an area of a lower side of the second plunger plate 230 are always kept unchanged, that is, upward pressure of the gas in the second working chamber 20 to the second plunger plate 230 is kept unchanged, until the decrease amount of pressure of the gas in the third working chamber 30 to the first plunger plate 220 offsets the increase amount of pressure of the gas in the first working chamber 10 to the second plunger plate 230, and then the three-pressure braking mechanism 3000 is balanced again. This series of release actions need to be repeated several times, and only when the intensity of pressure in the first working chamber 10 is quite close to the intensity of pressure in the second working chamber 20, the three-pressure braking mechanism 3000 can actually realize complete release. This mode has low release efficiency, and affects the running of the railway vehicles.

In view of this, the pressure braking device, the braking system, and the railway vehicle provided in the embodiments of the present invention can solve this problem.

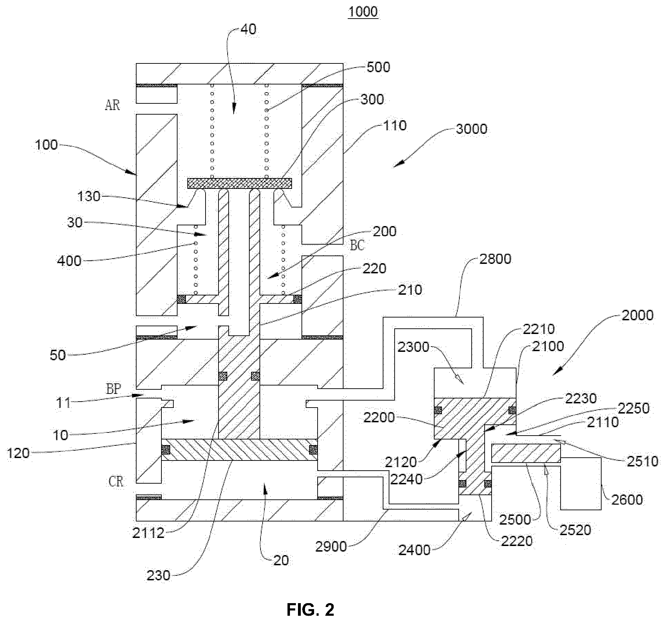

Referring to FIG. 2 to FIG. 4, the present embodiment provides a pressure braking device 1000, a braking system, and a railway vehicle, which will be described in detail below.

An embodiment of the present invention further provides a railway vehicle (not shown). The railway vehicle may include a vehicle body (not shown) and a braking system (not shown), wherein the braking system may be mounted on the vehicle body, and can improve the release efficiency of the braking. In the above, the braking system may include an auxiliary reservoir AR, a train pipe BP, a control reservoir CR, a brake cylinder BC, and a pressure braking device 1000, and the auxiliary reservoir AR, the train pipe BP, the control air cylinder CR, and the brake cylinder BC may all be in communication with the pressure braking device 1000.

Referring to FIG. 2-FIG. 3, the pressure braking device 1000 may include a three-pressure braking mechanism 3000 and a pressure reducing mechanism 2000. The three-pressure braking mechanism 3000 may include a first cylinder block 120. In the present embodiment, the three-pressure braking mechanism 3000 may be the three-pressure braking mechanism 3000 shown in FIG. 1, and a specific structure and principle are not described herein again. The first cylinder block 120 may have a first working chamber 10 and a second working chamber 20 isolated from each other.

In the above, taking relative positions in FIG. 2 for illustration, upper, lower, left, right, front, and rear directions shown in FIG. 2 may be understood as the relative positions in FIG. 2.

The pressure reducing mechanism 2000 may include a cylinder block 2100, a pressure reducing piston 2200, a partition member 2500, and a pressure reducing chamber 2600; a side wall of the cylinder block 2100 may be provided with a working passage 2110. Specifically, the working passage 2110 may be in communication with the outside, the pressure reducing piston 2200 may have a first end face 2210 and a second end face 2220 opposite to each other, and a side wall of the pressure reducing piston 2200 may be provided with a first groove 2230, and an area of the first end face 2210 may be greater than that of the second end face 2220.

The first groove 2230 and the inner wall of the cylinder block 2100 may define a piston chamber 2250; the first end face 2210 and the inner wall of the cylinder block 2100 may define a first chamber 2300, and the second end face 2220 and the inner wall of the cylinder block 2100 may define a second chamber 2400. In the above, the cylinder block 2100 may be configured to be in communication with the first cylinder block 120, the first chamber 2300 may be configured to be in communication with the first working chamber 10, and the second chamber 2400 may be configured to be in communication with the second working chamber 20.

The partition member 2500 may be provided in the working passage 2110. Specifically, the partition member 2500 may be a solid plate, the partition member 2500 may be configured to partition the working passage 2110 into an outside passage 2510 and a pressure reducing passage 2520, the pressure reducing passage 2520 and the pressure reducing chamber 2600 may be in communication with each other, and the piston chamber 2250 and the outside passage 2510 may be in communication with each other, specifically, the outside passage 2510 and the outside may be in communication with each other.

In the above, the pressure reducing piston 2200 may be movably provided in the cylinder block 2100 so as to be switched between a first preset position and a second preset position. In a situation that the pressure reducing piston 2200 is located in the first preset position, the second working chamber 20, the second chamber 2400, the pressure reducing passage 2520, and the pressure reducing chamber 2600 may be in communication with each other; in a situation that the pressure reducing piston 2200 is located in the second preset position, the pressure reducing piston 2200 may block the second chamber 2400 and the pressure reducing passage 2520, at this time, the pressure reducing passage 2520, the piston chamber 2250, and the outside passage 2510 may be in communication with each other in sequence, the side wall of the pressure reducing piston 2200 further may be provided with a second groove 2240, a side wall of the cylinder block 2100 may be recessed so as to form a blocking boss 2120, the blocking boss 2120 may be configured to abut against the second groove 2240, so that the pressure reducing piston 2200 is held in the second preset position, wherein the first preset position may be a position where the pressure reducing piston 2200 is located when the first end face 2210 of the pressure reducing piston 2200 abuts against a top wall of the cylinder block 2100.

In the above, the pressure braking device 1000 further may include a first sealing ring 2700 and a second sealing ring 2710. The first sealing ring 2700 may be sleeved over one end of the pressure reducing piston 2200 away from the second chamber 2400. The second sealing ring 2710 may be sleeved over one end of the pressure reducing piston 2200 away from the first chamber 2300. Specifically, both the first sealing ring 2700 and the second sealing ring 2710 may be annular sealing rings. In the present embodiment, the first sealing ring 2700 and the second sealing ring 2710 may be O-shaped sealing rings.

Optionally, the pressure braking device 1000 further may include a first pipeline 2800 and a second pipeline 2900, shapes of the first pipeline 2800 and the second pipeline 2900 may be both curved, the first pipeline 2800 may be configured to make the first chamber 2300 communicate with the first working chamber 10, and the second pipeline 2900 may be configured to make the second chamber 2400 communicate with the second working chamber 20.

Referring to FIG. 2 again, FIG. 2 is a schematic view of the pressure braking device 1000 in an inflation release position in the present embodiment. In this case, the pressure reducing piston 2200 is in the second preset position, and the pressure reducing piston 2200 may block the communication between the second chamber 2400 and the pressure reducing passage 2520. When the first working chamber 10 and the second working chamber 20 have the same intensity of pressure, as the area of the first end face 2210 is greater than that of the second end face 2220, the gas pressure in the first working chamber 10 may enable the pressure reducing piston 2200 to be held in the second preset position, at this time, the pressure reducing piston 2200 may block the second chamber 2400 and the pressure reducing passage 2520.

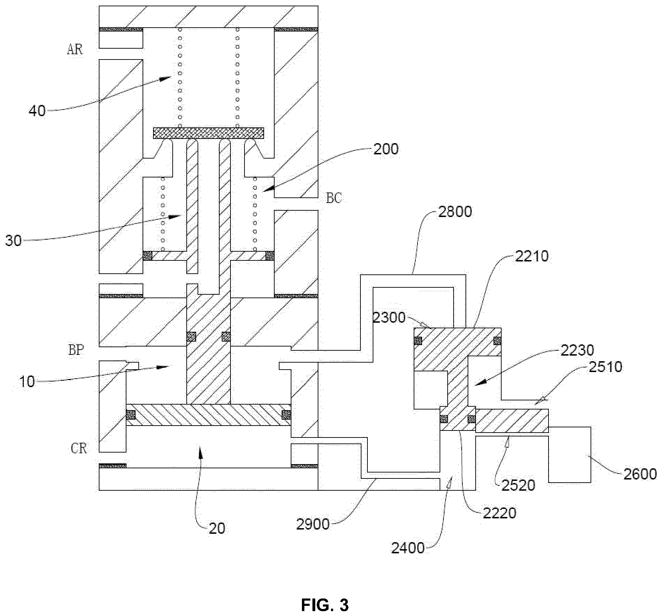

Referring to FIG. 3, FIG. 3 is a schematic view of the pressure braking device 1000 in a common braking position. Specifically, when the first working chamber 10 is depressurized, that is, the train pipe BP performs pressure reduction braking until the pressure of the gas in the second chamber 2400 on the second end face 2220 is greater than the pressure of the gas in the first chamber 2300 to the first end face 2210, the pressure reducing piston 2200 may move towards the first preset position and reach the first preset position, and further the second working chamber 20, the second pipeline 2900, the second chamber 2400, the pressure reducing passage 2520, and the pressure reducing chamber 2600 may be in communication with each other in sequence, in this case, an entire air chamber volume in communication with the second working chamber 20 may be increased, and the intensity of pressure of the gas in the second working chamber 20 may be decreased, in this case, the intensity of pressure in the second working chamber 20 may be the intensity of pressure in a second control reservoir, and when the pressure reducing piston 2200 blocks the second chamber 2400 and the pressure reducing passage 2520, the intensity of pressure in the second working chamber 20 may be the intensity of pressure in a first control reservoir, and may satisfy the following relationship: the intensity of pressure in the first control reservoir * (volume of the second working chamber 20 + volume of the second chamber 2400) ≈ intensity of pressure in the second control reservoir * (volume of the second working chamber 20 + volume of the second chamber 2400 + volume of the pressure reducing chamber 2600).

In this case, the first working chamber 10 may be inflated and pressurized again, and specifically, the pressure of the first working chamber may be increased according to a logarithmic curve, at a gradually decreased speed, until the pressure of the gas in the second chamber 2400 to the second end face 2220 is less than the pressure of the gas in the first chamber 2300 to the first end face 2210, the pressure reducing piston 2200 may move towards the second preset position and reach the second preset position, in this case, the pressure reducing piston 2200 may block the second chamber 2400 and the pressure reducing passage 2520, then, the second chamber 2400 is inflated and pressurized, and finally the intensities of pressure in the first working chamber 10 and the second working chamber 20 are kept equal again. At the same time, the gas in the pressure reducing chamber 2600 may be discharged to the outside through the pressure reducing passage 2520, the piston chamber 2250, and the outside passage 2510. When the intensity of pressure in the third working chamber 30 is lower than 30 kPa, the second working chamber 20 is inflated and pressurized again, finally, the intensities of pressure in the first working chamber 10 and the second working chamber 20 are kept equal again. That is, the intensity of pressure in the second control reservoir is increased to the intensity of pressure in the first control reservoir, further the intensities of pressure in the first working chamber 10 and in the second working chamber 20 may be enabled to be equal again more quickly, thereby improving the release efficiency of the braking.

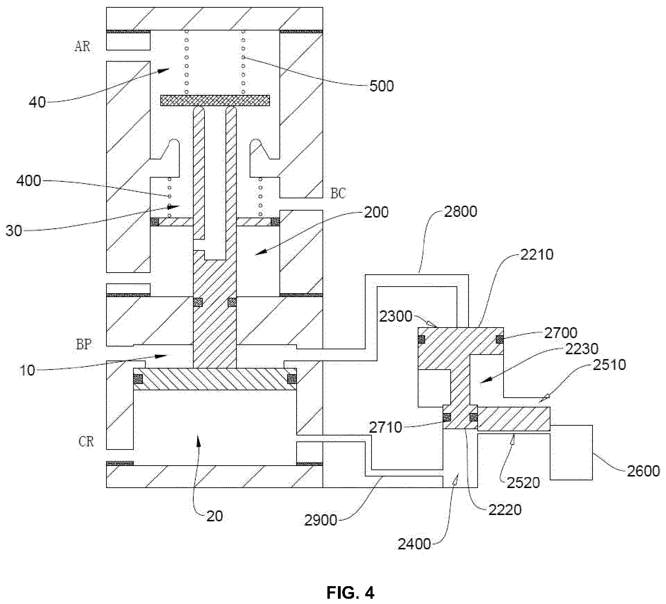

FIG. 4 is a schematic view of the pressure braking device 1000 in an emergency braking position in the present embodiment. When railway vehicles need emergency braking, the train pipe BP may perform emergency braking pressure reduction, the gas in the first working chamber 10 may be quickly discharged in a short period of time, at this time, the pressure reducing piston 2200 may move upward quickly, and reach the first preset position, at this time, the second working chamber 20, the second pipeline 2900, the second chamber 2400, the pressure reducing passage 2520, and the pressure reducing chamber 2600 may be in communication with each other in sequence, in this case, an entire gas chamber volume in communication with the second working chamber 20 may be increased, and the intensity of pressure of the gas in the second working chamber 20 may be decreased, then, the braking release action is performed, and then the first working chamber 10 is inflated and pressurized, and meanwhile the intensity of pressure in the third working chamber 30 is gradually decreased, until the pressure of the gas in the second chamber 2400 to the second end face 2220 is less than the pressure of the gas in the first chamber 2300 to the first end face 2210, the pressure reducing piston 2200 may move towards the second preset position, and reach the second preset position, at this time, the pressure reducing piston 2200 may block the second chamber 2400 and the pressure reducing passage 2520. At the same time, the gas in the pressure reducing chamber 2600 may be discharged to the outside through the pressure reducing passage 2520, the piston chamber 2250, and the outside passage 2510. When the intensity of pressure in the third working chamber 30 is less than 30 kPa, the second working chamber 20 is inflated and pressurized, and finally the intensities of pressure in the first working chamber 10 and in the second working chamber 20 are kept equal again, to be ready for next braking.

The pressure braking device 1000 may include a three-pressure braking mechanism 3000 and a pressure reducing mechanism 2000. The three-pressure braking mechanism 3000 may include a first cylinder block 120, and the first cylinder block 120 may have a first working chamber 10 and a second working chamber 20 isolated from each other; the pressure reducing mechanism 2000 may include a cylinder block 2100, a pressure reducing piston 2200, a partition member 2500, and a pressure reducing chamber 2600; a working passage 2110 may be provided on a side wall of the cylinder block 2100; the pressure reducing piston 2200 may have a first end face 2210 and a second end face 2220 opposite to each other, the side wall of the pressure reducing piston 2200 may be provided with a first groove 2230, and an area of the first end face 2210 may be greater than that of the second end face 2220; the first groove 2230 and the inner wall of the cylinder block 2100 may define a piston chamber 2250; the first end face 2210 and the inner wall of the cylinder block 2100 may define a first chamber 2300, and the second end face 2220 and the inner wall of the cylinder block 2100 may define a second chamber 2400; the cylinder block 2100 may be configured to be in communication with the first cylinder block 120, the first chamber 2300 may be configured to be in communication with the first working chamber 10, and the second chamber 2400 may be configured to be in communication with the second working chamber 20; the partition member 2500 may be provided in the working passage 2110, the partition member 2500 may be configured to partition the working passage 2110 into an outside passage 2510 and a pressure reducing passage 2520. The pressure reducing passage 2520 and the pressure reducing chamber 2600 may be in communication with each other, and the piston chamber 2250 and the outside passage 2510 may be in communication with each other. In the above, the pressure reducing piston 2200 may be movably provided in the cylinder block 2100 so as to be switched between the first preset position and the second preset position. In a situation that the pressure reducing piston 2200 is located in the first preset position, the second working chamber 20, the second chamber 2400, the pressure reducing passage 2520, and the pressure reducing chamber 2600 may be in communication with each other; and in a situation that the pressure reducing piston 2200 is located in the second preset position, the pressure reducing piston 2200 may block the second chamber 2400 and the pressure reducing passage 2520.

It is easily understood that when the first working chamber 10 and the second working chamber 20 have the same intensity of pressure, as the area of the first end face 2210 is greater than the area of the second end face 2220, the gas pressure may maintain the pressure reducing piston 2200 in the second preset position, at this time, the pressure reducing piston 2200 may block the second chamber 2400 and the pressure reducing passage 2520. After the first working chamber 10 is depressurized, until the pressure of the gas in the second chamber 2400 to the second end face 2220 is greater than the pressure of the gas in the first chamber 2300 to the first end face 2210, the plunger may move towards the first preset position, and reach the first preset position, further, the second working chamber 20, the second chamber 2400, the pressure reducing passage 2520, and the pressure reducing chamber 2600 may be in communication with each other, in this case, an entire air chamber volume in communication with the second working chamber 20 may be increased, and the intensity of pressure of the gas may be decreased, in this case, the first working chamber 10 may be inflated and pressurized again, until the pressure of the gas in the second chamber 2400 to the second end face 2220 is less than the pressure of the gas in the first chamber 2300 to the first end face 2210, the pressure reducing piston 2200 may move towards the second position and reach the second preset position, in this case, the pressure reducing piston 2200 may block the second chamber 2400 and the pressure reducing passage 2520, then the second chamber 2400 is inflated and pressurized, and finally the intensities of pressure in the first working chamber 10 and the second working chamber 20 are kept equal again, further the intensities of pressure in the first working chamber 10 and in the second working chamber 20 may be enabled to be equal again more quickly, in which process, the actions of the pressure reduction and release may be automatically completed without manual operation, and the release efficiency of the braking is improved.

Meanwhile, in the present embodiment, just by simply modifying the existing three-pressure braking mechanism 3000, and connecting the pressure reducing mechanism 2000, the braking release efficiency can be improved, the modification cost is low, and it is easily realized.

An embodiment of the present invention further provides a braking system. The braking system may include an auxiliary reservoir AR, a train pipe BP, a control reservoir CR, a brake cylinder BC, and the above pressure braking device 1000. All of the auxiliary reservoir AR, the train pipe BP, the control reservoir CR, and the brake cylinder BC may be in communication with the pressure braking device 1000, which can improve the release efficiency of the braking.

An embodiment of the present invention further provides a railway vehicle. The railway vehicle may include a vehicle body and the above braking system, wherein the braking system may be mounted on the vehicle body, which can improve the release efficiency of the braking.

The above-mentioned are merely specific embodiments of the present invention, but the scope of protection of the present invention is not limited thereto, and any modification or substitution that may be easily envisaged by those skilled in the present art within the technical scope disclosed in the present invention should fall within the scope of protection of the present invention. Therefore, the scope of protection of the present invention should be determined by the scope of protection of the appended claims.

### Industrial Applicability

Embodiments of the present invention provide a pressure braking device, a braking system, and a railway vehicle, relating to the field of brake. The pressure braking device includes a three-pressure braking mechanism and a pressure reducing mechanism. The three-pressure braking mechanism includes a first cylinder block. The first cylinder block has a first working chamber and a second working chamber isolated from each other; the pressure reducing mechanism is in communication with the first cylinder block, the pressure reducing mechanism includes a cylinder block, a pressure reducing piston, a partition member, and a pressure reducing chamber; the pressure reducing piston has a first end face and a second end face opposite to each other, and a side wall of the pressure reducing piston is provided with a first groove, and an area of the first end face is greater than that of the second end face; the first end face and the inner wall of the cylinder block define a first chamber, and the second end face and the inner wall of the cylinder block define a second chamber; the first cylinder block has a first working chamber and a second working chamber isolated from each other, a partition member is provided in the working passage, the partition member is configured to partition the working passage into an outside passage and a pressure reducing passage, which can improve the release efficiency of the braking.

Besides, it may be understood that the three-pressure braking mechanism, the pressure reducing mechanism, the pressure braking device, and the braking system in the present invention may be reproduced, and may be used in a variety of industrial applications. For example, the three-pressure braking mechanism, the pressure reducing mechanism, the pressure braking device, and the braking system in the present invention may be applied to transportation tools, such as railway vehicles.

## Claims

1. A pressure braking device (1000), comprising:
a three-pressure braking mechanism (3000), wherein the three-pressure braking mechanism (3000) comprises a first cylinder block (120), and the first cylinder block (120) has a first working chamber (10) and a second working chamber (20) isolated from each other; and
a pressure reducing mechanism (2000), wherein the pressure reducing mechanism (2000) comprises a cylinder block (2100), a pressure reducing piston (2200), a partition member (2500), and a pressure reducing chamber (2600), wherein a side wall of the cylinder block (2100) is provided with a working passage (2110);
the pressure reducing piston (2200) has a first end face (2210) and a second end face (2220) opposite to each other, and a side wall of the pressure reducing piston (2200) is provided with a first groove (2230), and an area of the first end face (2210) is greater than that of the second end face (2220); the first groove (2230) and an inner wall of the cylinder block (2100) define a piston chamber (2250); the first end face (2210) and the inner wall of the cylinder block (2100) define a first chamber (2300), and the second end face (2220) and the inner wall of the cylinder block (2100) define a second chamber (2400);
the cylinder block (2100) is configured to be in communication with the first cylinder block (120), the first chamber (2300) is configured to be in communication with the first working chamber (10), and the second chamber (2400) is configured to be in communication with the second working chamber (20);
the partition member (2500) is provided in the working passage (2110), and the partition member (2500) is configured to partition the working passage (2110) into an outside passage (2510) and a pressure reducing passage (2520), wherein the outside passage (2510) is configured to discharge the gas to the outside;
the pressure reducing passage (2520) and the pressure reducing chamber (2600) are in communication with each other, and the piston chamber (2250) and the outside passage (2510) are in communication with each other; and
the pressure reducing piston (2200) is movably provided in the cylinder block (2100) so as to be switched between a first preset position and a second preset position, wherein in a situation that the pressure reducing piston (2200) is located in the first preset position, the first cylinder block (120), the second chamber (2400), the pressure reducing passage (2520), and the pressure reducing chamber (2600) are in communication with each other;
**characterised in that**
in a situation that the pressure reducing piston (2200) is located in the second preset position, the pressure reducing piston (2200) blocks the communication between the second chamber (2400) and the pressure reducing passage (2520) and at the same time the gas in the pressure reducing chamber (2600) is discharged to the outside through the pressure reducing passage (2520), the piston chamber (2250), and the outside passage (2510).

2. The pressure braking device (1000) according to claim 1, wherein the side wall of the pressure reducing piston (2200) is further provided with a second groove (2240), a side wall of the cylinder block (2100) is recessed so as to form a blocking boss (2120), and the blocking boss (2120) is configured to abut against the second groove (2240), so that the pressure reducing piston (2200) is held in the second preset position.

3. The pressure braking device (1000) according to claim 1 or 2, wherein the pressure braking device (1000) further comprises a first sealing ring (2700), and the first sealing ring (2700) is sleeved over one end of the pressure reducing piston (2200) away from the second chamber (2400).

4. The pressure braking device (1000) according to claim 3, wherein the first sealing ring (2700) is an annular sealing ring.

5. The pressure braking device (1000) according to any one of claims 1 to 4, wherein the pressure braking device (1000) further comprises a second sealing ring (2710), and the second sealing ring (2710) is sleeved over one end of the pressure reducing piston (2200) away from the first chamber (2300).

6. The pressure braking device (1000) according to claim 5, wherein the second sealing ring (2710) is an annular sealing ring.

7. The pressure braking device (1000) according to any one of claims 1 to 6, wherein the pressure braking device (1000) further comprises a first pipeline (2800) and a second pipeline (2900), the first pipeline (2800) is configured to make the first chamber (2300) communicate with the first working chamber (10), and the second pipeline (2900) is configured to make the second chamber (2400) communicate with the second working chamber (20).

8. The pressure braking device (1000) according to claim 7, wherein the first pipeline (2800) and the second pipeline (2900) are both of curved shape.

9. A braking system, comprising an auxiliary reservoir (AR), a train pipe (BP), a control reservoir (CR), a brake cylinder (BC), and the pressure braking device (1000) according to any one of claims 1-8, wherein all of the auxiliary reservoir (AR), the train pipe (BP), the control reservoir (CR), and the brake cylinder (BC) are in communication with the pressure braking device (1000).

10. A railway vehicle, comprising a vehicle body and the braking system according to claim 9, wherein the braking system is mounted on the vehicle body.

## Patentansprüche

1. Druckbremsvorrichtung (1000) umfassend:
einen Dreidruckbremsmechanismus (3000), wobei der Dreidruckbremsmechanismus (3000) einen ersten Zylinderblock (120) umfasst und der erste Zylinderblock (120) eine erste Arbeitskammer (10) und eine zweite Arbeitskammer (20) umfasst, die voneinander isoliert sind; und
einen Druckreduziermechanismus (2000), wobei der Druckreduziermechanismus (2000) einen Zylinderblock (2100), einen Druckreduzierkolben (2200), ein Trennelement (2500) und eine Druckreduzierkammer (2600) umfasst, wobei
eine Seitenwand des Zylinderblocks (2100) mit einem Arbeitsdurchgang (2110) versehen ist;
der Druckreduzierkolben (2200) eine erste Endfläche (2210) und eine zweite Endfläche (2220) umfasst, die einander gegenüberliegen, und eine Seitenwand des Druckreduzierkolbens (2200) mit einer ersten Nut (2230) versehen ist und ein Bereich der ersten Endfläche (2210) größer ist als der der zweiten Endfläche (2220); die erste Nut (2230) und eine Innenwand des Zylinderblocks (2100) eine Kolbenkammer (2250) definieren; die erste Endfläche (2210) und die Innenwand des Zylinderblocks (2100) eine erste Kammer (2300) definieren und die zweite Endfläche (2220) und die Innenwand des Zylinderblocks (2100) eine zweite Kammer (2400) definieren;
der Zylinderblock (2100) konfiguriert ist, mit dem ersten Zylinderblock (120) in Verbindung zu stehen, die erste Kammer (2300) konfiguriert ist, mit der ersten Arbeitskammer (10) in Verbindung zu stehen, und die zweite Kammer (2400) konfiguriert ist, mit der zweiten Arbeitskammer (20) in Verbindung zu stehen;
das Trennelement (2500) im Arbeitsdurchgang (2110) vorgesehen ist und das Trennelement (2500) konfiguriert ist, den Arbeitsdurchgang (2110) in einen Außendurchgang (2510) und einen Druckreduzierdurchgang (2520) zu unterteilen, wobei der Außendurchgang (2510) zum Ablassen des Gases nach außen konfiguriert ist;
der Druckreduzierdurchgang (2520) und die Druckreduzierkammer (2600) miteinander in Verbindung stehen und die Kolbenkammer (2250) und der Außendurchgang (2510) miteinander in Verbindung stehen; und
der Druckreduzierkolben (2200) beweglich im Zylinderblock (2100) vorgesehen ist, um zwischen einer ersten voreingestellten Position und einer zweiten voreingestellten Position umgeschaltet zu werden,
wobei in einer Situation, in der sich der Druckreduzierkolben (2200) in der ersten voreingestellten Position befindet, der erste Zylinderblock (120), die zweite Kammer (2400), der Druckreduzierdurchgang (2520) und die Druckreduzierkammer (2600) miteinander in Verbindung stehen;
**dadurch gekennzeichnet, dass**
in einer Situation, in der sich der Druckreduzierkolben (2200) in der zweiten voreingestellten Position befindet, der Druckreduzierkolben (2200) die Verbindung zwischen der zweiten Kammer (2400) und dem Druckreduzierdurchgang (2520) blockiert, und gleichzeitig das Gas in der Druckreduzierkammer (2600) durch den Druckreduzierdurchgang (2520), die Kolbenkammer (2250) und den Außendurchgang (2650) nach außen abgelassen wird.

2. Druckbremsvorrichtung (1000) nach Anspruch 1, wobei die Seitenwand des Druckreduzierkolbens (2200) ferner mit einer zweiten Nut (2240) versehen ist, eine Seitenwand des Zylinderblocks (2100) vertieft ist, um einen Blockiervorsprung (2120) zu formen, und der Blockiervorsprung (2120) konfiguriert ist, an die zweite Nut (2240) zum Anliegen zu kommen, so dass der Druckreduzierkolben (2200) in der zweiten voreingestellten Position gehalten wird.

3. Druckbremsvorrichtung (1000) nach Anspruch 1 oder 2, wobei die Druckbremsvorrichtung (1000) ferner einen ersten Dichtungsring (2700) umfasst und der erste Dichtungsring (2700) über ein Ende des Druckreduzierkolbens (2200) von der zweiten Kammer (2400) weg gestülpt ist.

4. Druckbremsvorrichtung (1000) nach Anspruch 3, wobei der erste Dichtungsring (2700) ein ringförmiger Dichtungsring ist.

5. Druckbremsvorrichtung (1000) nach einem der Ansprüche 1 bis 4, wobei die Druckbremsvorrichtung (1000) ferner einen zweiten Dichtungsring (2710) umfasst und der zweite Dichtungsring (2710) über ein Ende des Druckreduzierkolbens (2200) von der ersten Kammer (2300) weg gestülpt ist.

6. Druckbremsvorrichtung (1000) nach Anspruch 5, wobei der zweite Dichtungsring (2710) ein ringförmiger Dichtungsring ist.

7. Druckbremsvorrichtung (1000) nach einem der Ansprüche 1 bis 6, wobei die Druckbremsvorrichtung (1000) ferner eine erste Rohrleitung (2800) und eine zweite Rohrleitung (2900) umfasst, wobei die erste Rohrleitung (2 2800) konfiguriert ist, die erste Kammer (2300) mit der ersten Arbeitskammer (10) in Verbindung zu bringen, und die zweite Rohrleitung (2900) konfiguriert ist, die zweite Kammer (2400) mit der zweiten Arbeitskammer (20) in Verbindung zu bringen.

8. Druckbremsvorrichtung (1000) nach Anspruch 7, wobei die erste Rohrleitung (2800) und die zweite Rohrleitung (2900) beide eine gekrümmte Form aufweisen.

9. Bremssystem umfassend einen Hilfsbehälter (AR), eine Bremsleitung (BP), einen Steuerbehälter (CR), einen Bremszylinder (BC) und die Druckbremsvorrichtung (1000) nach einem der Ansprüche 1 bis 8, wobei alle, der Hilfsbehälter (AR), die Bremsleitung (BP), der Steuerbehälter (CR) und der Bremszylinder (BC) mit der Druckbremsvorrichtung (1000) in Verbindung stehen.

10. Schienenfahrzeug, umfassend einen Fahrzeugkörper und das Bremssystem nach Anspruch 9, wobei das Bremssystem am Fahrzeugkörper angeordnet ist.

## Revendications

1. Dispositif de freinage par pression (1000), comprenant :
un mécanisme de freinage à trois pressions (3000), dans lequel le mécanisme de freinage à trois pressions (3000) comprend un premier bloc-cylindres (120), et le premier bloc-cylindres (120) a une première chambre de travail (10) et une seconde chambre de travail (20) isolées l'une de l'autre ; et
un mécanisme de réduction de pression (2000), dans lequel le mécanisme de réduction de pression (2000) comprend un bloc-cylindres (2100), un piston de réduction de pression (2200), un élément de séparation (2500) et une chambre de réduction de pression (2600), dans lequel
une paroi latérale du bloc-cylindres (2100) est pourvue d'un passage de travail (2110) ; le piston de réduction de pression (2200) a une première face d'extrémité (2210) et une seconde face d'extrémité (2220) opposées l'une à l'autre, et une paroi latérale du piston de réduction de pression (2200) est pourvue d'une première rainure (2230), et une surface de la première face d'extrémité (2210) est plus grande que celle de la seconde face d'extrémité (2220) ; la première rainure (2230) et une paroi intérieure du bloc-cylindres (2100) définissent une chambre de piston (2250) ; la première face d'extrémité (2210) et la paroi intérieure du bloc-cylindres (2100) définissent une première chambre (2300), et la seconde face d'extrémité (2220) et la paroi intérieure du bloc-cylindres (2100) définissent une seconde chambre (2400) ;
le bloc-cylindres (2100) est configuré pour être en communication avec le premier bloc-cylindres (120), la première chambre (2300) est configurée pour être en communication avec la première chambre de travail (10), et la seconde chambre (2400) est configurée pour être en communication avec la seconde chambre de travail (20) ;
l'élément de séparation (2500) est prévu dans le passage de travail (2110), et l'élément de séparation (2500) est configuré pour séparer le passage de travail (2110) en un passage extérieur (2510) et un passage de réduction de pression (2520), dans lequel le passage extérieur (2510) est configuré pour évacuer le gaz vers l'extérieur ;
le passage de réduction de pression (2520) et la chambre de réduction de pression (2600) sont en communication l'un avec l'autre, et la chambre de piston (2250) et le passage extérieur (2510) sont en communication l'un avec l'autre ; et
le piston de réduction de pression (2200) est mobile dans le bloc-cylindres (2100) de manière à passer d'une première à une seconde position préréglée, le piston de réduction de pression (2200) se trouvant dans la première position préréglée, le premier bloc-cylindres (120), la seconde chambre (2400), le passage de réduction de pression (2520) et la chambre de réduction de pression (2600) étant en communication l'un avec l'autre ;
**caractérisé en ce que**
lorsque le piston de réduction de pression (2200) se trouve dans la seconde position préréglée, le piston de réduction de pression (2200) bloque la communication entre la seconde chambre (2400) et le passage de réduction de pression (2520) et, en même temps, le gaz contenu dans la chambre de réduction de pression (2600) est évacué vers l'extérieur par le passage de réduction de pression (2520), la chambre de piston (2250) et le passage extérieur (2510).

2. Dispositif de freinage par pression (1000) selon la revendication 1, dans lequel la paroi latérale du piston de réduction de pression (2200) est en outre pourvue d'une seconde rainure (2240), une paroi latérale du bloc-cylindres (2100) est évidée de manière à former un bossage de blocage (2120), et le bossage de blocage (2120) est configuré pour venir en butée contre la seconde rainure (2240), de sorte que le piston de réduction de pression (2200) est maintenu dans la seconde position préréglée.

3. Dispositif de freinage par pression (1000) selon la revendication 1 ou 2, dans lequel le dispositif de freinage par pression (1000) comprend en outre un premier anneau d'étanchéité (2700), et le premier anneau d'étanchéité (2700) est manchonné sur une extrémité du piston de réduction de pression (2200) à l'écart de la seconde chambre (2400).

4. Dispositif de freinage par pression (1000) selon la revendication 3, dans lequel le premier anneau d'étanchéité (2700) est un anneau d'étanchéité annulaire.

5. Dispositif de freinage par pression (1000) selon l'une quelconque des revendications 1 à 4, dans lequel le dispositif de freinage par pression (1000) comprend en outre un second anneau d'étanchéité (2710), et le second anneau d'étanchéité (2710) est manchonné sur une extrémité du piston de réduction de pression (2200) à l'écart de la première chambre (2300).

6. Dispositif de freinage à pression (1000) selon la revendication 5, dans lequel le second anneau d'étanchéité (2710) est un anneau d'étanchéité annulaire.

7. Dispositif de freinage par pression (1000) selon l'une quelconque des revendications 1 à 6, dans lequel le dispositif de freinage par pression (1000) comprend en outre une première canalisation (2800) et une seconde canalisation (2900), la première canalisation (2800) étant configurée pour faire communiquer la première chambre (2300) avec la première chambre de travail (10), et la seconde canalisation (2900) étant configurée pour faire communiquer la seconde chambre (2400) avec la seconde chambre de travail (20).

8. Dispositif de freinage par pression (1000) selon la revendication 7, dans lequel la première canalisation (2800) et la seconde canalisation (2900) sont toutes deux de forme incurvée.

9. Système de freinage comprenant un réservoir auxiliaire (AR), un tuyau de train (BP), un réservoir de commande (CR), un cylindre de frein (BC) et le dispositif de freinage par pression (1000) selon l'une quelconque des revendications 1 à 8, dans lequel le réservoir auxiliaire (AR), le tuyau de train (BP), le réservoir de commande (CR) et le cylindre de frein (BC) sont tous en communication avec le dispositif de freinage par pression (1000).

10. Véhicule ferroviaire, comprenant une carrosserie et le système de freinage selon la revendication 9, dans lequel le système de freinage est monté sur la carrosserie.
